Europäisches Patentamt

European Patent Office

Office européen des brevets

(11) Numéro de publication: **0 320 325 B1**

# FASCICULE DE BREVET EUROPEEN

(45) Date de publication de fascicule du brevet: **30.06.93**

(51) Int. Cl.5: **C08L 21/00**, C08K 7/02, C08J 5/04

(21) Numéro de dépôt: **88402890.3**

(22) Date de dépôt: **17.11.88**

Le dossier contient des informations techniques présentées postérieurement au dépôt de la demande et ne figurant pas dans le présent fascicule.

(54) **Matériau composite à matrice élastomérique de haut module, à anisotropie élevée et ses applications.**

(30) Priorité: **24.11.87 FR 8716235**

(43) Date de publication de la demande:
**14.06.89 Bulletin 89/24**

(45) Mention de la délivrance du brevet:
**30.06.93 Bulletin 93/26**

(84) Etats contractants désignés:
**AT BE CH DE ES FR GB GR IT LI LU NL SE**

(56) Documents cités:
**DE-A- 2 031 817**

**DATABASE JAPIO, no. 86-024605, Orbit Search Service, California, US**

**RUBBER CHEMISTRY AND TECHNOLOGY, vol. 56, no. 3, juillet-août 1983, pages 619-638, Akron, Ohio, US; L.A. GOETTLER et al.: "Short fiber reinforced elastomers"**

(73) Titulaire: **CAOUTCHOUC MANUFACTURE ET PLASTIOUES**
**143bis, rue Yves le Coz**
**F-78005 Versailles(FR)**

(72) Inventeur: **Colley, Robert**
**29, rue de Levant**
**F-58300 Decize(FR)**
Inventeur: **Lecouturier, Fabrice**
**20, rue de la Charbonnière Saint Léger des Vignes**
**F-58300 Decize(FR)**
Inventeur: **Ledevehat, Christian**
**43, rue Kessler**
**F-63000 Clermont-Ferrand(FR)**

EP 0 320 325 B1

# EP 0 320 325 B1

## Description

L'invention concerne le domaine des semi-produits utilisés dans l'industrie du caoutchouc et, plus particulièrement, les compositions élastomériques anisotropes, c'est-à-dire présentant un module d'élasticité élévé dans un sens et une grande souplesse dans le sens perpendiculaire.

Les applications des articles en caoutchouc requièrent, avec l'évolution technique des industries utilisatrices, des performances mécaniques et thermiques de plus en plus élevées. Il est bien évident qu'un tel niveau de performances ne peut être atteint que par des systèmes composites, c'est-à-dire des matériaux dont la matrice élastomérique est renforcée par des charges pulvérulentes, des textiles ou des éléments métalliques continus ou discontinus, par exemple.

En effet, les matériaux composites, à matrices élastomériques connaissent, depuis de nombreuses années, un essor considérable, dans tous les domaines industriels, car ces matrices présentent - outre une facilité de mise en formes complexes - des caractéristiques intéressantes pour un coût modéré, sous réserve que leurs propriétés mécaniques soient accrues par l'incorporation d'un matériau de renforcement, soit sous forme de charge minérale ou organique (tel le noir de carbone) soit sous forme de renforcement - continu ou discontinu - constitué à partir de fils textiles ou métalliques, (comme, par exemple, dans les pneumatiques, les tuyaux ou les bandes transporteuses).

Il est quasiment impossible - vu l'abondance des publications sur le sujet - de dresser un état de l'art antérieur pour les composites à matrices élastomériques.

On peut cependant remarquer qu'il est assez difficile de réaliser des matériaux fortement anisotropes à matrices en composition elastomérique en utilisant un matériau de renforcement sous forme pulvérulente ou en fibres courtes, les techniques de mélangeage des composants tendant à disperser la charge renforçante de manière homogène au sein de la composition élastomérique.

Le document DE-A-2 031 817 de GENERAL TIRE & RUBBER décrit, en effet, des composites à matrice élastomérique renforcés de fibres courtes d'amiante, présentant des modules relativement élevés, mais dépourvus de tout caractère d'anisotropie.

Cependant, des composites à matrice élastomérique, de haut module et à anisotropie élevée, sont décrits dans le brevet français 2.162.691 et dans le certificat d'addition 2.211.941 de KLEBER COLOMBES. Dans ces matériaux, la charge, initialement pulvérulente, est constituée de grains de polyéthylène de haute masse moléculaire. Par travail du mélange homogène, à chaud, entre les cylindres d'une calandre, il se produit une fibrillation in situ des grains de polyéthylène et un alignement des fibrilles dans une direction préférentielle.

La nature de la charge conduit donc à l'obtention d'un module élevé et le procédé de calandrage provoque l'anisotropie.

De même, le brevet US 4.056.591 de MONSANTO, propose la réalisation de tuyaux anisotropes, en composite à matrice élastomérique renforcée de fibres courtes, par orientation de la libre au cours du procédé d'extrusion du composite.

La mise en oeuvre ultérieure de ces composites pour la réalisation de produits finis est délicate car les traitements thermiques nécessaires tendent à réduire l'anisotropie du matériau.

Des matériaux à haut module dans une direction et forte anisotropie sont aisément réalisés à partir d'une matrice élastomérique et d'un renforcement continu, sous forme de nappe, constitué par des cablés textiles ou métalliques. Ces matériaux, sont couramment utilisés dans l'industrie de transformation du caoutchouc, pour la fabrication de tuyaux, de pneumatiques, de courroies de transmission ou de bandes transporteuses, par exemple.

Cependant, ces composites présentent dans la direction orthogonale à celle du renforcement, des propriétés mécaniques très inférieures, qui sont celles de la matrice, ce qui nécessite l'utilisation d'associations multicouche.

L'objectif de l'invention est la mise au point d'un composite à matrice élastomérique présentant des caractéristiques élevées non plus seulement dans la direction préférentielle du renforcement, comme il est connu, mais également dans la direction orthogonale à celle du renforcement, tout en conservant, entre les deux directions une anisotropie élevée. De plus, un autre objectif de l'invention est d'obtenir des composites peu onéreux et faciles à mettre en oeuvre pour la réalisation de produits finis.

Afin de simplifier l'exposé de l'invention, les propriétés du matériau composite à matrice élastomérique sont définies comme suit :

- le "module de tension équivalent" est la valeur du module en traction, sous un allongement supposé de 100 % (valeur qui ne peut être atteinte physiquement). Le module de tension équivalent est calculé, par extrapolation, à partir de la valeur du module réel, mesurée sous un allongement de 4 % ;

EP 0 320 325 B1

- le "rapport d'anisotropie" est le rapport du module de tension équivalent dans la direction du renforcement au module de tension réel ou équivalent dans une direction orthogonale ;
- "la tension de démouillage" est la force sous laquelle se produit la rupture de la liaison adhésive entre le renforcement et la matrice élastomérique, le renforcement perdant alors son efficacité puisque toute force appliquée au matériau composite s'exerce sur la matrice élastomérique.

L'invention vise non seulement le matériau composite à matrice élastomérique, de haut module et forte anisotropie, mais également ses applications.

L'invention consiste donc en un matériau composite à matrice élastomérique comportant un système réticulant, éventuellement une charge renforçante sous forme pulvérulente, un système d'adhérisation in situ comprenant une amine, au moins un renforcement fibreux constitué de 5 à 50 parts de fibres textiles ou métalliques, de longueur au plus égale à 20 millimètres, pour 100 parts d'élastomère, et une résine thermodurcissable.

L'invention est caractérisée en ce que le module de traction, sous un allongement de 100 % dudit matériau composite, dans la direction orthogonale à celle du renforcement fibreux, est porté à au moins 6 MPa par incorporation d'une résine thermodurcissable, d'une teneur au moins égale à dix fois celle de l'amine du système d'adhérisation in situ, ladite résine thermodurcissable pouvant être accompagnée ou non de son agent de réticulation, et en ce qu'un rapport d'anisotropie des modules de traction, entre la direction du renforcement et la direction orthogonale, au moins égal à 6 est obtenu par orientation du renforcement fibreux au sein de la matrice élastomérique.

L'objet de l'invention, ses variantes et ses applications seront mieux compris à la lecture des exemples non limitatifs et des figures, dans lesquels :

- l'exemple 1 est la formulation type du matériau composite anisotrope,
- l'exemple 2 est une formulation à base d'un élastomère synthétique, le polychloroprène, accompagnée de ses propriétés mécaniques,
- l'exemple 3 est une formulation à base d'un autre élastomère synthétique, un copolymère d'éthylène, de propylène et d'un termonomère diénique, accompagnée de ses propriétés mécaniques,
- l'exemple 4 est une formulation à base de caoutchouc naturel, accompagnée de ses propriétés mécaniques,
- la figure 1 est relative à l'application du matériau composite à matrice élastomérique de haut module et forte anisotropie au domaine des courroies de transmission,
- la figure 2 schématise la structure d'une bande transporteuse comportant une couche de materiau composite anisotrope, comme élément de renforcement,
- la figure 3 est l'illustration de l'emploi du matériau composite anisotrope dans les talons de pneumatiques,
- la figure 4 montre l'utilisation du matériau composite anisotrope dans le talon d'un manchon compensateur de dilatation à bride intégrée,
- la figure 5 illustre l'emploi du matériau composite anisotrope dans le talon d'un tuyau flexible à bride intégrée,
- la figure 6 est relative à l'utilisation du matériau composite anisotrope dans les protecteurs de membranes de suspension pneumatique,
- la figure 7 illustre la constitution d'un matériau composite stratifié utilisé comme protection contre les chocs et, en particulier, les impacts d'engins balistiques.

L'exemple 1 est la formulation type du matériau composite anisotrope, à matrice élastomérique, objet de l'invention, qui comportera, tout ou partie des ingrédients ci-dessous, dont les proportions sont indiquées en parties en poids pour 100 parties en poids d'élastomère :

| | |
|---|---|
| - élastomère naturel ou synthétique | 100 |
| - système d'adjuvants anti-oxydants | de 2 à 7 |
| - système d'agents de mise en oeuvre et/ou plastifiants | de 3 à 100 |
| - système réticulant de l'élastomère | de 8 à 15 |
| - résine thermodurcissable | de 3 à 30 |
| - réticulant de la résine | de 0 à 10 % du poids de résine |
| - charge renforçante pulvérulente | de 0 à 200 |
| - renforcement fibreux | de 5 à 50 |

Les proportions de ces divers composants et plus particulièrement de la charge pulvérulente et du système d'agents de mise en oeuvre et/ou plastifiants sont fonction de la nature de l'élastomère de base ;

en particulier, les formulations à base de terpolymère d'éthylène de propylène et d'un termonomère acceptent de très fortes proportions d'agents de mise en oeuvre et/ou de plastifiants et de charges.

La base de la matrice est constituée d'au moins un élastomère naturel ou synthétique, tel que, à titre d'exemples non limitatifs, du caoutchouc naturel, du polyisoprène ou un homologue supérieur, du SBR, du polychloroprène, du polyéthylène halogéné, un copolymère de butadiène et d'acrylonitrile ou une de ses formes hydrogénées, un copolymère d'isoprène et d'isobutylène ou une de ses formes halogénées, un copolymère d'éthylène et de propylène, un terpolymère d'éthylène, de propylène et d'un termonomère diénique ou encore un élastomère silicone. Selon leur comptabilité, différents élastomères peuvent être associés, en proportions diverses, pour former la base de la matrice.

Le système d'adjuvants anti-oxydants sera du type classique utilisé dans l'industrie de transformation du caoutchouc, c'est-à-dire, composé, par exemple, d'amines aromatiques, seules ou associées à d'autres composants.

Le système d'agents de mise en oeuvre et/ou de plastifiants comporte, le plus généralement, au moins une huile paraffinique, naphténique ou aromatique, qui peut, éventuellement, être associée à une cire ou tout autre agent de mise en oeuvre.

Le système réticulant de l'élastomère est adapté à la nature dudit élastomère et comprend généralement de l'oxyde de zinc, de l'acide stéarique, un (ou plusieurs) accélérateur(s) et un agent de réticulation. D'autres systèmes réticulants tels ceux à base de peroxydes organiques peuvent également être utilisés.

La composition élastomérique peut, en outre, comporter un système promoteur d'adhérence, du type RFS, destiné à provoquer l'adhésion - in situ - entre le renforcement fibreux et la composition élastomérique et/ou entre le composite à matrice élastomérique et un renforcement textile ou métallique - par exemple continu - de l'article à fabriquer.

La résine thermodurcissable utilisée est généralement du type formophénolique et préférentiellement, de l'un des types urée/formol, mélamine/formol ou résorcine/formol. Les résines de type époxy ou polyester sont également utilisables.

Le réticulant de la résine est, le plus généralement, une amine, utilisée à environ 10 % en poids de la quantité de résine. La présence du réticulant de la résine thermocondensable n'est pas obligatoire dans le mélange à base d'élastomère.

La charge renforçante pulvérulente sera choisie préférentiellement dans la vaste gamme des noirs de carbone ou des charges claires comme la silice.

Le renforcement fibreux est constitué de fibres textiles ou métalliques, naturelles, artificielles ou synthétiques, dont la longueur n'excède pas 20 millimètres. Les fibres textiles les plus couramment utilisées sont le coton, ou la soie, pour les fibres naturelles, la fibrane ou la cellulose régénérée pour les fibres artificielles, le polyamide, le polyester, l'aramide, le polyacrylonitrile, l'alcool polyvinylique, ou les polyoléfines pour les fibres synthétiques. Pour obtenir des modules très élevés il est également possible d'utiliser des fibres de verre, de métal, de bore ou de carbone.

L'exemple 2 regroupe la composition 2 et les propriétés mécaniques de ladite composition, en comparaison avec un mélange témoin, dit témoin 2, de même formulation, à l'exception de la résine thermodurcissable et du renforcement fibreux.

La composition 2 est une formulation à base d'un élastomère synthétique, le polychloroprène, avec un système de réticulation classique, composé de magnésie, d'acide stéarique et d'oxyde de zinc, le système d'agents de mise en oeuvre et/ou de plastifiants est constitué d'huile naphténique, la charge pulvérulente est du noir de carbone, le renforcement fibreux est constitué de fibres de polyester d'une longueur de 5 millimètres environ et la résine thermodurcissable est une résine formo-phénolique.

La composition pondérale de ce composite est donnée ci-dessous :

## Composition n° 2

| Composants | Proportions pondérales |
|---|---|
| Polychloroprène modifié au soufre . | 100,00 |
| Acide Stéarique ................... | 0,50 |
| Oxyde de Zinc .................... | 5,00 |
| Oxyde de Magnésium .............. | 4,00 |
| Etylène-thiourée ................ | 0,60 |
| Anti-oxydants ................... | 2,50 |
| Huile naphténique ............... | 10,00 |
| Noir HAF ........................ | 70,00 |
| Résine formophénolique ........... | 20,00 |
| Hexaméthylène tétramine .......... | 2,00 |
| Fibre polyester .................. | 20,00 |

Les propriétés mécaniques rassemblées ci-après, sont mesurées dans la direction du renforcement et dans la direction orthogonale. Elles sont données comparativement à celles du témoin n° 2 et à celles d'un composite à haut module de l'art antérieur cité (Exemple III du certificat d'addition FR 2.221.941), composite qui présente les caractéristiques les plus élevées mais n'est cité qu'à titre indicatif puisqu'il ne comporte pas le même polymère de base.

| Propriété | Témoin 2 | Composition 2 | | Exemple I art antérieur | |
|---|---|---|---|---|---|
| | | Direction Renfort | Direction Orthogonale | Direction Renfort | Direction Orthogonale |
| Module 100 % MPa, (réel ou équivalent) | 4,8 | 350 | 19 | - | 5 |
| Tension à 4 % MPa | - | 8,2 | - | - | - |
| Tension à 50 % MPa | 2,7 | - | 7 | - | - |
| Tension de démouillage MPa | - | 25,7 | - | - | - |
| Allongement de démouillage % | - | 17 | - | - | - |
| Résistance à la rupture MPa | 19 | - | 7,1 | 116 | 12 |
| Allongement à la rupture % | 480 | - | 58 | 9,7 | 420 |
| Anisotropie | voisine de 1 | 18,4 calculée d'après les modules à 100 % | | 9,7 calculée d'après les résistances à la rupture | |

Ce tableau montre que le composite conforme à la composition 2 présente une anisotropie très élevée, presque double de celle du composite antérieurement connu, un module équivalent de 350 MPa et un module à 100 %, dans la direction orthogonale à celle du renforcement, près de quatre fois supérieur à celui du composite antérieurement connu. En comparaison avec le témoin numéro 2, le rapport des modules est de près de 73 dans la direction du renforcement et de près de 4 dans la direction orthogonale.

EP 0 320 325 B1

Les valeurs de résistance et d'allongement à la rupture de la composition 2, dans la direction du renforcement, ne sont pas indiquées car elles ne présentent pas de signification physique, le démouillage du renforcement fibreux se produisant avant la rupture du matériau composite, mais sous une tension élevée de plus de 25 MPa. Les caractéristiques mécaniques de la composition 2 montrent bien que le composite présente un module élevé dans les deux sens et une forte anisotropie.

L'exemple 3 regroupe la composition 3 et les propriétés mécaniques de ladite composition, en comparaison avec un mélange témoin, dit témoin 3, de même formulation à l'exception de la résine thermodurcissable et du renforcement fibreux, évidemment absents de la formulation du témoin 3.

La composition 3 est une formulation à base d'un élastomère de synthèse, une terpolymère d'éthylène, de propylène et d'un termonomère diénique (appelé caoutchouc EPDM), avec une accélération classique au soufre. Le système plastifiant est constitué, de manière tout à fait conventionnelle, d'huile paraffinique, la charge pulvérulente est du noir de carbone, le renforcement fibreux est formé de polyamide d'une longueur de 8 millimètres et la résine thermodurcissable est une résine formo-phénolique accompagnée de son agent réticulant, l'examéthylène tétramine;

La composition pondérale du composite est donnée dans le tableau ci-après :

Composition n° 3

| Composant | Proportions pondérales |
|---|---|
| EPDM .............................. | 100,00 |
| Noir HAF .......................... | 80,00 |
| Stéarine .......................... | 1,50 |
| Oxyde de Zinc ..................... | 5,00 |
| Soufre ............................ | 2,00 |
| M.T.B.S. .......................... | 1,00 |
| T.M.T.D. .......................... | 0,50 |
| Huile paraffinique ............... | 50,00 |
| Résine formo-phénolique .......... | 15,00 |
| Hexaméthylène tétramine .......... | 1,50 |
| Fibre polyamide .................. | 15,00 |

Il est à noter que cette formulation comporte des taux de noir de carbone et d'huile paraffinique très élevés par rapport aux formulations des compositions 2 et 4.

De telles quantités sont familières à l'homme de l'art, dans les compositions à base de caoutchouc EPDM.

Les propriétés mécaniques rassemblées ci-après, sont mesurées dans la direction du renforcement et dans la direction orthogonale. Elles sont données comparativement à celles du témoin n° 3 qui présente la même formulation que la composition élastomérique 3, à l'exception de la fibre polyamide et de la résine thermodurcissable.

Le tableau fournit, également, les caractéristiques mécaniques du composite à haut modulé de l'art antérieur, précédemment cité, (c'est à dire l'exemple III du certificat d'addition FR 2.221.941, puisqu'il s'agit de la composition de ce document ayant la valeur de module la plus élevée). Ledit composite de l'art antérieur n'est cité qu'à titre indicatif puisque sa matrice comporte un polymère de base d'une nature différente de celle de la composition 3.

6

| Propriété | Témoin 3 | Composition 3 | | Exemple III art antérieur | |
|---|---|---|---|---|---|
| | | Direction Renfort | Direction Orthogonale | Direction Renfort | Direction Orthogonale |
| Module 100 % MPa, (réel ou équivalent) | 2,9 | 208 | 15,8 | - | 5 |
| Tension à 4 % MPa | - | 4,9 | - | - | - |
| Tension à 50 % MPa | 1,6 | - | 4,8 | - | - |
| Tension de démouillage MPa | - | 21 | - | - | - |
| Allongement de démouillage % | - | 15 | - | - | - |
| Résistance à la rupture MPa | 17,3 | - | 9,3 | 116 | 12 |
| Allongement à la rupture | 430 | - | 130 | 9,7 | 420 |
| Anisotropie | voisine de 1 | 13 calculée d'après les modules à 100 % | | 9,7 calculée d'après les résistances à la rupture | |

Ce tableau montre que le composite conforme à la composition 3 présente une anisotropie élevée, égale à 1,3 fois celle du composite antérieurement connu, un module équivalent supérieur à 200 MPa et surtout un module à 100 %, dans la direction orthogonale à celle du renforcement, trois fois plus élevée que celui du composite de l'art antérieur. Par rapport au témoin n° 3, le rapport des modules est de près de 72 dans la direction du renforcement et de 5,4 dans la direction orthogonale.

Les valeurs de résistance et d'allongement à la rupture de la composition 3, dans la direction du renforcement, ne sont pas indiquées car elles ne présentent pas de signification physique, le démouillage du renforcement fibreux se produisant avant la rupture du matériau composite mais sous une tension élevée, de plus de 21 MPa. Les caractéristiques mécaniques de la composition 3 montrent bien que le composite présente un module élevé dans les deux sens et une forte anisotropie.

L'exemple 4 regroupe la composition 4 et les propriétés mécaniques de ladite composition, en comparaison avec un mélange témoin, dit témoin 4, de même formulation, à l'exception de la résine thermodurcissable et du renforcement fibreux, évidemment absents de la formulation du composant témoin.

La composition 4 est une formulation à base de caoutchouc naturel avec un système réticulant bien connu à base de soufre ; le système plastifiant, classique, est constitué d'huile aromatique, la charge pulvérulente est du noir de carbone, utilisé dans les proportions habituelles pour ce type d'élastomère, le renforcement fibreux est formé de polyamide aromatique, donc d'une fibre à haut module, d'une longueur de 5 millimètres et la résine thermodurcissable est une résine urée-formol accompagnée de son agent réticulant, l'hexaméthylène tétramine, utilisée, comme il est d'usage courant, à raison de 10 % en poids de la résine.

La composition pondérale du composite est donnée dans le tableau ci-après :

| Composition n° 4 | |
|---|---|
| Composants | Proportions pondérales |
| Caoutchouc naturel SMR10 | 100,00 |
| Noir HAF | 55,00 |
| Stéarine | 1,50 |
| Oxyde de Zinc | 5,00 |
| Huile aromatique | 7,00 |
| Résine urée-formol | 10,00 |
| Hexaméthylène tétramine | 1,00 |
| Soufre | 1,80 |
| C.B.S. | 0,80 |
| T.M.T.D. | 0,20 |
| Fibre polyamide aromatique | 10,00 |

Les propriétés mécaniques rassemblées ci-après sont mesurées dans la direction du renfort et dans la direction orthogonale.

Elles sont données comparativement à celles du témoin n°4, de même formulation à l'exception de la résine thermodurcissable et du renforcement fibreux constitué de fibres courtes de polyamide aromatique, évidemment absents de la formulation dudit témoin 4.

A titre de comparaison, sont données, également, les propriétés mécaniques d'un composite à haut module de l'art antérieur, (c'est-à-dire l'exemple I du certificat d'addition FR 2.221.941), dont la matrice est également à base de caoutchouc naturel, bien que le renforcement ne soit pas de même nature puisqu'il s'agit, dans le composite de l'art antérieur, de fibrilles de polyéthylène de très haute masse moléculaire, formées in situ, au sein de la matrice élastomérique, au moment du calandrage en feuilles, et que ledit renforcement ne soit pas, non plus, présent dans les mêmes proportions.

| Propriété | Témoin 4 | Composition 4 | | Exemple I art antérieur | |
|---|---|---|---|---|---|
| | | Direction Renfort | Direction Orthogonale | Direction Renfort | Direction Orthogonale |
| Module 100 % MPa, (réel ou équivalent) | 3,9 | 180 | 12,7 | - | 5,9 |
| Tension à 4 % MPa | - | 3,9 | - | - | - |
| Tension à 50 % MPa | 2,1 | - | 3,2 | - | - |
| Tension de démouillage MPa | - | 16 | - | - | - |
| Allongement de démouillage % | - | 20 | - | - | - |
| Résistance à la rupture MPa | 25,5 | - | 13,2 | 580 | 219 |
| Allongement à la rupture % | 525 | - | 160 | 5,5 | 340 |
| Anisotropie | voisine de 1 | 14,1 calculée d'après les modules à 100 % | | 2,6 calculée d'après les résistances à la rupture | |

Ce tableau montre que le composite conforme à la composition 4 présente une anisotropie élevée, égale à 5,4 fois celle du composite antérieurement connu, un module équivalent de 180 MPa et surtout un module à 100 %, dans la direction orthogonale à celle du renforcement deux fois plus élevé que celui du composite de l'art antérieur. Par rapport au témoin n°4, le rapport des modules est de 46 dans la direction du renforcement et de 3,25 dans la direction orthogonale.

Les valeurs de résistance et d'allongement à la rupture de la composition 4, dans la direction du renforcement, ne sont pas indiquées car elles ne présentent pas de signification physique, le démouillage du renforcement fibreux se produisant avant la rupture du matériau composite, à une valeur élevée de 16 MPa. Les caractéristiques mécaniques de la composition 4 montrent bien que le composite présente un module élevé dans les deux sens et une forte anisotropie.

La réalisation du matériau composite à matrice élastomérique, objet de l'invention, peut se faire par mélange des différents composants individuels ou à partir de mélanges-maîtres, disponibles dans le commerce, qui sont déjà des associations d'une matrice élastomérique et de fibres courtes.

Quels que soient les matériaux de départ, l'opération de mélangeage des composants est suivie d'une opération destinée à orienter les fibres courtes dans la matrice, telle le calandrage du composite en feuilles ou l'extrusion d'un profilé.

Le procédé de réalisation du matériau composite se compose donc, par exemple, des opérations ci-dessous, bien connues de l'industrie de transformation du caoutchouc.

Pour l'opération de mélangeage, il est recommandé d'opérer à faible vitesse, dans un mélangeur interne, en veillant à ce que l'augmentation de température soit la plus faible possible.

A l'élastomère, sera ajoutée une partie (environ 50 %) de la quantité de la charge pulvérulente, puis la résine thermocondensable, le reste de la charge pulvérulente, la fibre courte et, enfin, le système réticulant.

Chaque addition de composant sera faite lorsque les composants précédemment introduits sont intimement mélangés à l'élastomère.

Pour l'opération de calandrage, le mélange sera réchauffé sur une calandre et tiré, à chaud, en feuilles minces, ce qui aura pour effet de provoquer l'orientation des fibres courtes au sein de la composition élastomérique.

La description des propriétés mécaniques obtenues sur quelques compositions, données à titre d'exemples non limitatifs, montre que les composites à matrice élastomérique, à haut module et rapport d'anisotropie élevé peuvent être obtenus par addition d'une charge pulvérulente, d'une résine thermocondensable et d'un renfort fibreux à un élastomère naturel ou synthétique.

Les propriétés mécaniques du composite étant directement liées aux proportions pondérales et aux caractéristiques intrinsèques des composants de renforcement, c'est-à-dire la charge pulvérulente, le renforcement fibreux et la résine, il est ainsi possible, pour un élastomère donné qui sera choisi pour ses qualités de résistance à l'abrasion, à la chaleur ou aux huiles, par exemple, d'obtenir toute une palette de compositions à module et anisotropie adaptés à l'application.

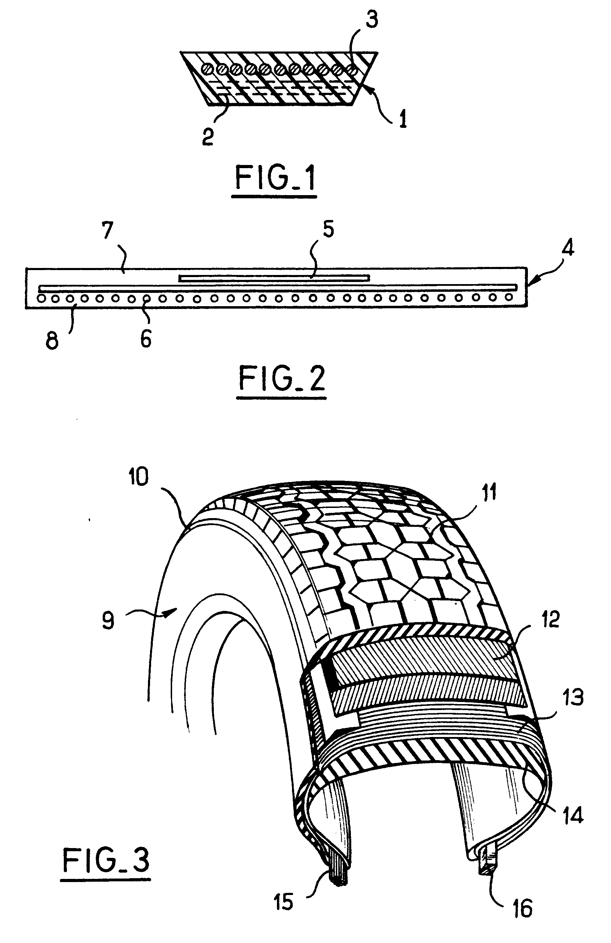

Les figures 1 à 7 illustrent, à titre d'exemples non limitatifs, quelques applications particulières du matériau composite anisotrope.

La figure 1 est relative à l'application aux courroies de transmission.

La courroie (1), ici illustrée de section trapézoïdale, mais qui peut être de section rectangulaire, ronde ou hexagonale, et en version enveloppée ou sans enveloppage, crantée ou non crantée, multistriée, dentée ou non dentée, est schématisée par ses deux constituants principaux, la base (2) et l'armature (3) ou élément continu de renforcement, longitudinal, constitué de retors textiles ou de cables métalliques.

La base (2) est le plus généralement, constituée d'une composition élastomérique de formulation adoptée aux contraintes de l'utilisation de la courroie.

La réalisation de ladite base (2) en matériau composite anisotrope conforme à l'invention permet, grâce au module élevé du matériau, de transmettre, à section égale, des puissances plus élevées, tandis que l'anisotropie est mise à profit pour conserver une élasticité adaptée au passage sur les poulies. Dans les courroies, le matériau composite anisotrope est utilisé de manière telle que la direction du renforcement fibreux est orthogonale à celle du renforcement continu.

Le matériau composite anisotrope peut être utilisé dans tous les types de courroies, lisses, striées ou crantées, dans les courroies synchrones.

La figure 2 schématise la structure d'une bande transporteuse (4) comportant une strate de matériau composite anisotrope.

La bande transporteuse (4), illustrée ici, comporte un pli transversal de renforcement médian (5) et une armature textile (6), longitudinale, ces deux éléments étant noyés au sein d'une composition élastomérique de formulation conventionnelle qui forme les revêtements supérieur (7) et inférieur (8).

Dans les solutions conventionnelles, de forte résistance, le pli transversal de renforcement médian (5) est constitué le plus généralement de cables métalliques.

L'utilisation de matériau composite anisotrope en lieu et place des cables métalliques permet une confection simplifiée de la bande transporteuse.

Le matériau composite anisotrope de renforcement transversal (5) permet de donner du corps à la bande, grâce à son module élevé et autorise, tous autres paramètres de construction et d'utilisation étant égaux, la manutention de charges plus lourdes. Par contre, l'anisotropie du matériau composite confère à la bande la flexibilité nécessaire au passage sur les tambours.

Il est bien évident pour l'homme de l'art que l'utilisation de matériau composite anisotrope n'est pas limitée à un pli médian de renforcement (5) de la bande transporteuse illustrée.

Selon les applications, il serait possible de réaliser une bande transporteuse utilisant une ou plusieurs strates dudit matériau composite anisotrope pour remplacer les éléments de renforcement transversaux classiques, en retors ou tissus textiles ou en cables métalliques.

La figure 3 est l'illustration de l'emploi du matériau composite anisotrope dans les talons de pneumatiques.

L'écorché du pneu (9) montre la bande de flanc (10), la bande de roulement (11), le pli constituant la ceinture (12) et celui constituant la carcasse (13), posé sur un coussin (14). Le talon (15), réalisé à partir de cables métalliques représente la solution de l'art antérieur alors que le talon (16) est réalisé en matériau composite anisotrope selon l'invention.

Selon la formulation du matériau composite, il est ainsi possible de réaliser, par moulage, des talons susceptibles de remplacer les talons, antérieurement réalisés à partir de gommes dures et de fils d'acier, qui assurent les mêmes fonctions de liaison entre le pneu et la jante et de transmission des couples d'accélération, de freinage et de guidage.

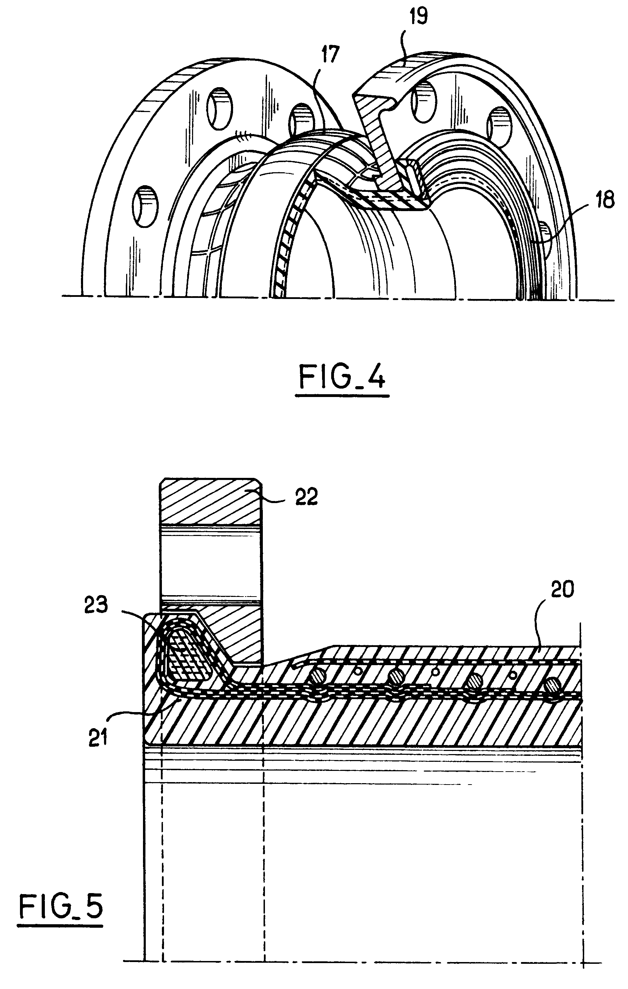

La figure 4 montre l'utilisation du matériau composite anisotrope dans le talon d'un manchon souple de compensation de la dilatation (17) dans les tuyauteries industrielles, ledit manchon compensateur comportant au moins une bride intégrée (18) destinée au montage de contrebrides (19). Il existe différentes techniques de montage des contrebrides (19) sur les talons des brides intégrées (18). L'une - utilisée avec des talons rigides - consiste à monter les contrebrides (19) en cours de fabrication du manchon compensateur, avant vulcanisation, ce qui oblige à la manutention de compensateurs alourdis de leurs contrebrides et à la fabrication, pour un type donné de compensateurs, d'autant de variantes que de dimensions ou de types de contrebrides. Une autre technique nécessite des talons souples que l'on engage à force dans la contrebride après fabrication.

Malheureusement, en raison même de la souplesse des talons, les manchons de dilatation de ce type ne supportent pas une utilisation sous pression interne élevée. Une troisième, enfin, consiste à renforcer les talons par des armatures à secteurs, indépendants, lié ou fractionnables, qui permettent de plier le talon de la bride pour le faire passer, au moment du montage, par l'orifice de la contrebride.

L'utilisation du matériau composite anisotrope au moins dans le talon de la bride intégrée permet d'éviter l'emploi d'une armature rigide, grâce à son module élevé - ce qui allège le manchon - tout en conservant, grâce à son anisotropie, une possibilité de pliage de talon lui permettant de passer par l'orifice de la contrebride, autorisant ainsi le montage des contrebrides après la fabrication du manchon compensateur de dilatation qui sera, cependant, capable de résister, en service, à des pressions internes élevées.

L'emploi du matériau composite anisotrope, au moins dans le talon de la bride intégrée (18) du manchon compensateur de dilatation (17), permet ainsi de combiner la résistance aux pressions internes élevées avec la facilité de montage des contrebrides.

La figure 5 illustre l'emploi du matériau composite anisotrope à l'extrémité d'un tuyau flexible (20) comportant une bride intégrée (21) sur laquelle viendra se monter une contrebride (22), le talon de la bride intégrée (21) étant renforcé par ledit matériau composite anisotrope (23).

Il est bien évident que cette application présente les mêmes avantages que ceux décrits précédemment pour le compensateur de dilatation à bride intégrée.

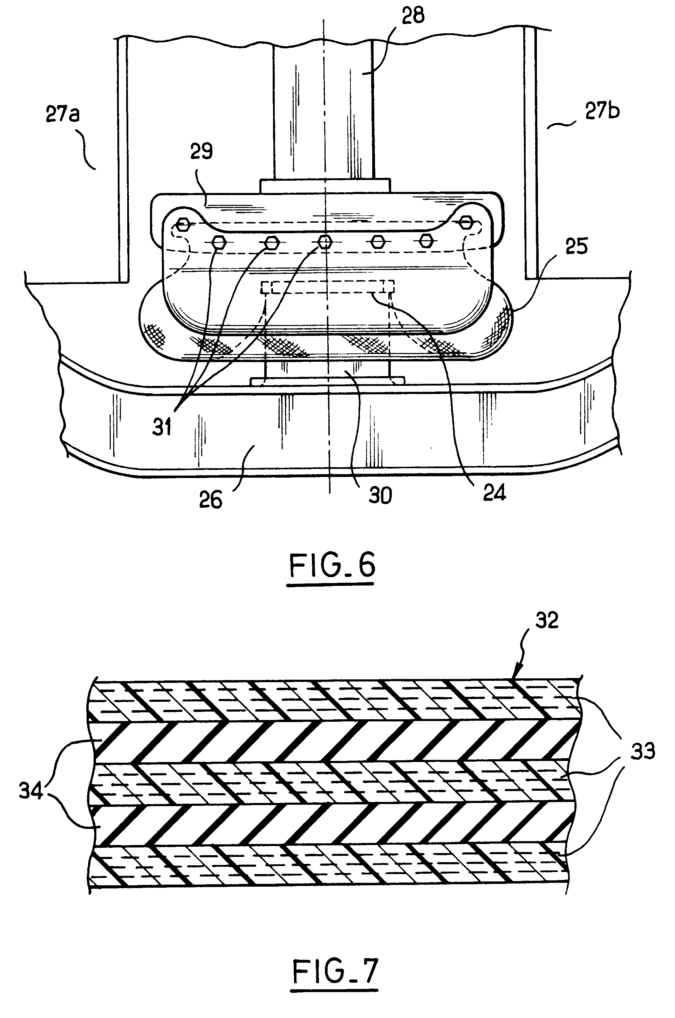

La figure 6 est relative à l'utilisation du matériau composite anisotrope dans les protecteurs (24) de membranes de suspensions pneumatiques de véhicules, soumises à grande vitesse, à des projections de pierres. La figure, qui décrit l'application ferroviaire, représente ce que voit depuis le quai, l'observateur d'un train muni de ces suspensions pneumatiques (25).

Le chassis de bogie (26) est chargé de porter les extrémités des caisses (27a) et (27b) par l'intermédiaire d'un anneau d'appui (28) qui constitue la particularité des trains à intercirculation. Ledit anneau d'appui (28) repose par une couronne (29) de fixation de la membrane souple de suspension (25), qui roule, dans ses débattements verticaux, sur une sorte de piston (30), fixé dau chassis de bogie (26). Les rebords de celui-ci et les accessoires tels qu'amortisseurs qui y sont fixés ne forment pas suffisamment écran aux projections de pierres et un écran protecteur (24), réalisé en matériau composite anisotrope, fixé par des vis (31) sur la couronne (29), doit venir protéger la membrane dans les directions les plus vulnérables tout en laissant libres, en particulier, les débattements transversaux dynamiques. L'intérêt du matériau composite anisotrope, dans cette application, réside, à la fois, dans le module élevé qui oppose une forte résistance à la déchirure par l'impact des pierres et dans l'anisotropie qui permet, dans la direction orthogonale à celle du renforcement fibreux, une flexibilité autorisant les débattements dynamiques transversaux.

La figure 7 illustre la constitution d'un matériau composite stratifié (32), utilisé comme protection contre les chocs et, particulièrement, contre les impacts d'engins balistiques. Dans l'exemple cité le composite stratifié (32) est constitué de 3 strates (33) de matériau composite conforme à l'invention et de deux strates (34) de composition élastomérique très amortissante.

Selon la protection antichocs recherchée, il n'est pas indispensable d'inclure dans le composite stratifié les strates de composition élastomérique amortissante.

Le module élevé du composite des strates (33) s'oppose à la pénétration des projectiles. Si lesdites strates (33) étaient, cependant, traversées, les couches amortissantes (34) absorberaient l'énergie cinétique du projectile qui n'atteindrait pratiquement jamais la couche en matériau composite suivante.

Les propriétés d'anisotropie du matériau composite, objet de l'invention, ne sont utilisées que pour créer un matériau composite stratifié isotrope par alternance des strates (33) à des angles différents d'une couche à l'autre.

Les applications des matériaux composites anisotropes ne sont, bien évidemment, pas limitées aux quelques exemples décrits précédemment.

Lesdits matériaux sont également susceptibles de remplacer les compositions élastomériques homogènes ou renforcées utilisées, par exemple, pour la réalisation de corps de tuyaux - les strates étant alors utilisées par paires, à un angle de ± 54° par rapport à l'axe longitudinal -, dans toute application utilisant une matrice élastomérique renforcée par un élément monodirectiel et dans les articles isotropes multicouche par alternance de strates à des angles variables de 0 à ± 90°.

Sans sortir du cadre de l'invention, l'homme de l'art peut, bien entendu, apporter aux composition des matériaux composites données à titre d'exemple non limitatifs différentes modifications, en particulier dans les proportions pondérales et dans la nature des éléments de renforcement ou de l'élastomère de base ou encore du système réticulant.

## Revendications

1. Matériau composite à matrice élastomérique comportant un système réticulant, éventuellement une charge renforçante sous forme pulvérulente, un système d'adhérisation in situ comprenant une amine, au moins un renforcement fibreux constitué de 5 à 50 parts de fibres textiles ou métalliques, de longueur au plus égale à 20 millimètres, pour 100 parts d'élastomère, caractérisé en ce que le module de traction, sous un allongement de 100 % dudit matériau composite, dans la direction orthogonale à celle du renforcement fibreux, est porté à au moins 6 MPa par incorporation d'une résine thermodurcissable, d'une teneur au moins égale à dix fois celle de l'amine du système d'adhérisation in situ, ladite résine thermodurcissable pouvant être accompagnée ou non de son agent de réticulation, et en ce qu'un rapport d'anisotropie des modules de traction, entre la direction du renforcement et la direction orthogonale, au moins égal à 6 est susceptible d'être obtenu par orientation du renforcement fibreux au sein de la matrice élastomérique.

2. Matériau composite à matrice élastomérique de haut module et forte anisotropie selon la revendication 1, caractérisé en ce que le renforcement fibreux est constitué de fibres naturelles, telles que le coton ou la soie.

3. Matériau composite à matrice élastomérique de haut module et forte anisotropie selon la revendication 1, caractérisé en ce que le renforcement fibreux est constitué de fibres artificielles, telles que la fibranne ou la cellulose régénérée.

4. Matériau composite à matrice élastomérique de haut module et forte anisotropie selon la revendication 1, caractérisé en ce que le renforcement fibreux est constitué de fibres synthétiques telles que du polyamide, du polyamide aromatique, du polyester, une polyoléfine, de l'alcool polyvinylique ou du polyacrylonitrile.

5. Matériau composite à matrice élastomérique de haut module et forte anisotropie selon la revendication 1, caractérisé en ce que le renforcement fibreux est constitué de fibres métalliques.

6. Matériau composite à matrice élastomérique de haut module et forte anisotropie selon la revendication 1, caractérisé en ce que le renforcement fibreux est constitué de fibres de verre, de bore ou de carbone.

7. Matériau composite à matrice élastomérique de haut module et forte anisotropie selon l'une des revendications 1 à 6, caractérisé en ce que la résine thermodurcissable est du type formophénolique.

8. Matériau composite à matrice élastomérique de haut module et forte anisotropie selon l'une des revendications 1 à 6, caractérisé en ce que la résine thermodurcissable est du type urée-formol.

9. Matériau composite à matrice élastomérique de haut module et forte anisotropie selon l'une des revendications 1 à 6, caractérisé en ce que la résine thermodurcissable est une résine époxy ou polyester.

10. Composite stratifié, caractérisé en ce qu'il est constitué de plusieurs strates de matériau composite à matrice élastomérique de haut module et forte anisotropie, conforme à l'une des revendications 1 à 9, lesdites strates étant superposées de manière telle que les directions du renforcement soient parallèles, de telle sorte que ledit composite stratifié reste anisotrope.

11. Composite stratifié, caractérisé en ce qu'il est constitué de plusieurs strates de matériau composite à matrice élastomérique de haut module et forte anisotropie, conforme à l'une des revendications 1 à 9, lesdites strates étant superposées de manière telle que les directions du renforcement présentent entre deux strates successives un angle compris entre 0 et 90°.

12. Courroie de transmission à capacité de transmission de puissance améliorée, caractérisée en ce que sa base est constituée d'au moins une strate de matériau composite à matrice élastomérique de haut module et forte anisotropie conforme à l'une des revendications 1 à 9, la direction du renforcement dudit matériau composite étant orthogonale à l'axe longitudinal de la courroie.

**13.** Bande transporteuse, caractérisée en ce qu'elle comporte au moins une strate de matériau composite à matrice élastomérique de haut module et forte anisotropie, conforme à l'une des revendications 1 à 9, la direction du renforcement dudit matériau composite étant orthogonale à l'axe longitudinal de ladite bande transporteuse.

**14.** Talon de pneumatique, caractérisé en ce qu'il comporte au moins une strate de matériau composite à matrice élastomérique de haut module et forte anisotropie, conforme à l'une des revendications 1 à 9.

**15.** Compensateur souple de dilatation comportant au moins une bride intégrée, caractérisé en ce que le talon de ladite bride est constitué d'au moins une strate de matériau composite à matrice élastomérique de haut module et forte anisotropie conforme à l'une des revendications 1 à 9.

**16.** Tuyau flexible comportant au moins une bride intégrée, caractérisé en ce que le talon de ladite bride est constitué d'au moins une strate de matériau composite à matrice élastomérique de haut module et forte anisotropie conforme à l'une des revendications 1 à 9.

**17.** Protecteur de membrane de suspension pneumatique, caractérisé en ce qu'il est constitué d'au moins une strate de matériau composite à matrice élastomérique de haut module et forte anisotropie conforme à l'une des revendications 1 à 9.

**18.** Matériau souple de protection contre les chocs, en particulier les impacts d'engins balistiques, caractérisé en ce qu'il est constitué d'au moins une strate de matériau composite à matrice élastomérique de haut module et forte anisotropie conforme à l'une des revendications 1 à 9.

**Claims**

**1.** Composite material with elastomeric matrix comprising a crosslinking system, optionally a reinforcing filler in pulverulent form, an adhesion system in situ comprising an amine, at least one fibrous reinforcement composed of 5 to 50 parts of textile or metallic fibres at least 20 millimetres long for every 100 parts of elastomer, characterised in that the tensile modulus, at an extension of the said composite material of 100% in the direction orthogonal to that of the fibrous reinforcement, is made at least 6 MPa by the incorporation of a thermosetting resin, in an amount equal to at least ten times that of the amine of the adhesion system in situ, which thermosetting resin may or may not be accompanied by its cross-linking agent, and that an anisotropy ratio of the tensile moduli, between the reinforcement direction and the orthogonal direction, of at least 6 is capable of being obtained by orientation of the fibrous reinforcement within the elastomeric matrix.

**2.** Composite material of high modulus and high anisotropy with elastomeric matrix according to claim 1, characterized in that the fibrous reinforcement is composed of natural fibres, such as cotton or silk.

**3.** Composite material of high modulus and high anisotropy with elastomeric matrix according to claim 1, characterized in that the fibrous reinforcement is composed of artificial fibres, such as staple rayon or regenerated cellulose.

**4.** Composite material of high modulus and high anisotropy with elastomeric matrix according to claim 1, characterized in that the fibrous reinforcement is composed of synthetic fibres such as polyamide, aromatic polyamide, polyester, a polyolefin, poly vinyl alcohol or polyacrylonitrile.

**5.** Composite material of high modulus and high anisotropy with elastomeric matrix according to claim 1, characterized in that the fibrous reinforcement is composed of metallic fibres.

**6.** Composite material of high modulus and high anisotropy with elastomeric matrix according to claim 1, characterized in that the fibrous reinforcement is composed of fibres of glass, boron or carbon.

**7.** Composite material of high modulus and high anisotropy with elastomeric matrix according to one of claims 1 to 6, characterized in that the thermosetting resin is of the phenol-formaldehyde type.

8. Composite material of high modulus and high anisotropy with elastomeric matrix according to one of claims 1 to 6, characterized in that the thermosetting resin is of the urea-formaldehyde type.

9. Composite material of high modulus and high anisotropy with elastomeric matrix according to one of claims 1 to 6, characterized in that the thermosetting resin is an epoxy or polyester resin.

10. Laminated composite, characterized in that it is composed of several layers of composite material of high modulus and high anisotropy with elastomeric matrix according to one of claims 1 to 9, the said layers being superposed in such a way that the directions of reinforcement are parallel, so that the said laminated composite remains anisotropic.

11. Laminated composite, characterized in that it is composed of several layers of composite material of high modulus and high anisotropy with elastomeric matrix according to one of claims 1 to 9, the said layers being superposed in such a way that the directions of reinforcement of two successive layers form an angle of between 0 and 90°.

12. Driving belt with improved power transmission capacity, characterized in that its base is composed of at least one layer of composite material of high modulus and high anisotropy with elastomeric matrix according to one or claims 1 to 9, the direction of reinforcement of the said composite material being orthogonal to the longitudinal axis of the belt.

13. Belt conveyor,characterized in that it comprises at least one layer of composite material of high modulus and high anisotropy with elastomeric matrix according to one of claims 1 to 9, the direction of reinforcement of the said composite material being orthogonal to the longitudinal axis of the belt conveyor.

14. Tyre bead, characterized in that it comprises at least one layer of composite material of high modulus and high anisotropy with elastomeric matrix according to one of claims 1 to 9.

15. Flexible expansion joint having at least one integrated flange, characterized in that the bead of the said flange is composed of at least one layer of composite material of high modulus and high anisotropy with elastomeric matrix according to one of claims 1 to 9.

16. Flexible tube having at least one integrated flange, characterized in that the bead of the said flange is composed of at least one layer of composite material of high modulus and high anisotropy with elastomeric matrix according to one of claims 1 to 9.

17. Pneumatic suspension membrane protector, characterized in that it is composed of at least one layer of composite material of high modulus and high anisotropy with elastomeric matrix according to one of claims 1 to 9.

18. Flexible material for protection against impacts, especially the impacts of ballistic missiles, characterized in that it is composed of at least one layer of composite material of high modulus and high anisotropy with elastomeric matrix according to one or claims 1 to 9.

**Patentansprüche**

1. Verbundwerkstoff mit elastomerer Matrix, der ein Vernetzungssystem, ggf. einen Verstärkungsfüller pulveriger Form, ein ein Amin enthaltenes System zur Verklebung in situ und mindestens eine Faserstoffverstärkung enthält, die aus 5 bis 50 Teilen textilen oder metallischen Fasern mit einer Länge von höchstens 20 mm auf 100 Elastomerteile besteht, dadurch gekennzeichnet, daß das Zugmodul bei einer Dehnung des Verbundwerkstoffs um 100% in einer Richtung senkrecht zur Richtung der Verstärkung durch Beimischung eines Duroplasts auf mindestens gleich 6 MPa angehoben ist, dessen Gehalt mindestens das Zehnfache des Amins des Systems zur Verklebung in situ beträgt, wobei der Duroplast von seinem Vernetzungsmittel begleitet sein kann oder nicht, und daß ein Verhältnis der Anisotropie der Zugmodule zwischen der Richtung der Verstärkung und der hierzu senkrechten Richtung von mindestens gleich 6 durch Ausrichtung der Faserstoffverstärkung in der elastomeren Matrix erhalten werden kann.

**2.** Verbundwerkstoff mit elastomerer Matrix mit hohem Modul und starker Anisotropie nach Anspruch 1, dadurch gekennzeichnet, daß die Faserstoffverstärkung aus natürlichen Fasern, wie Baumwolle oder Seide, besteht.

**3.** Verbundwerkstoff mit elastomerer Matrix mit hohem Modul und starker Anisotropie nach Anspruch 1, dadurch gekennzeichnet, daß die Faserstoffverstärkung aus Kunstfasern, wie Chemiestapelfaser oder Regeneratzellulose, besteht.

**4.** Verbundwerkstoff mit elastomerer Matrix mit hohem Modul und starker Anisotropie nach Anspruch 1, dadurch gekennzeichnet, daß die Faserstoffverstärkung aus synthetischen Fasern, wie Polyamid, aromatisches Polyamid, Polyester, Polyolefin, Polyvinylalkohol oder Polyacrylnitril, besteht.

**5.** Verbundwerkstoff mit elastomerer Matrix mit hohem Modul und starker Anisotropie nach Anspruch 1, dadurch gekennzeichnet, daß die Faserstoffverstärkung aus metallischen Fasern besteht.

**6.** Verbundwerkstoff mit elastomerer Matrix mit hohem Modul und starker Anisotropie nach Anspruch 1, dadurch gekennzeichnet, daß die Faserstoffverstärkung aus Glasfasern, Borfasern oder aus Kohlenstoffasern besteht.

**7.** Verbundwerkstoff mit elastomerer Matrix mit hohem Modul und starker Anisotropie nach einem der Ansprüche 1 bis 6, dadurch gekennzeichnet, daß das Duroplast vom Formophenol-Typ ist.

**8.** Verbundwerkstoff mit elastomerer Matrix mit hohem Modul und starker Anisotropie nach einem der Ansprüche 1 bis 6, dadurch gekennzeichnet, daß das Duroplast vom Carbamidformol-Typ ist.

**9.** Verbundwerkstoff mit elastormerer Matrix mit hohem Modul und starker Anisotropie nach einem der Ansprüche 1 bis 6, dadurch gekennzeichnet, daß das Duroplast ein Epoxydharz oder Polyesterharz ist.

**10.** Verbundschichtstoff, dadurch gekennzeichnet, daß er aus mehreren Schichten eines Verbundwerkstoffes mit elastomerer Matrix mit hohem Modul und starker Anisotropie besteht, gemäß einem der Ansprüche 1 bis 9, wobei die Schichten derart übereinander angeordnet sind, daß die Richtungen der Verstärkung so parallel liegen, daß der Verbundschichtstoff anisotropbleibt

**11.** Verbundschichtstoff, dadurch gekennzeichnet, daß er aus mehreren Schichten eines Verbundwerkstoffes mit elastomerer Matrix mit hohem Modul und starker Anisotropie besteht, gemäß einem der Ansprüche 1 bis 9, wobei die Schichten derart übereinander angeordnet sind, daß die Richtungen der Verstärkung zwischen zwei aufeinanderfolgenden Schichten einen Winkel zwischen 0 und 90° einnehmen.

**12.** Antriebsriemen mit verbesserten Kraftübertragungseigenschaften, dadurch gekennzeichnet, daß sein Grundmaterial aus mindestens einer Schicht eines Verbundwerkstoffes mit elastomerer Matrix mit hohem Modul und starker Anisotropie nach einem der Ansprüche 1 bis 9 besteht, wobei die Richtung der Verstärkung des Verbundwerkstoffes senkrecht zur Längsachse des Antriebsriemens liegt.

**13.** Transportband, dadurch gekennzeichnet, daß es mindestens eine Schicht eines Verbundwerkstoffes mit elastomerer Matrix mit hohem Modul und starker Anisotropie nach einem der Ansprüche 1 bis 9 enthält, wobei die Richtung der Verstärkung des Verbundwerkstoffes senkrecht zur Längsachse des Transportbandes liegt.

**14.** Reifenwulst, dadurch gekennzeichnet, daß er mindestens eine Schicht eines Verbundwerkstoffes mit elastomerer Matix mit hohem Modul und starker Anisotropie nach einem der Ansprüche 1 bis 9 enthält.

**15.** Elastischer Dehnungsausgleicher mit mindestens einem integrierten Flanschstutzen, dadurch gekennzeichnet, daß die Schulter des Flanschstutzens mindestens eine Schicht eines Verbundwerkstoffes mit elastomerer Matrix mit hohem Modul und starker Anisotropie nach einem der Ansprüche 1 bis 9 aufweist.

**16.** Flexibler Schlauch mit mindestens einem integrierten Flanschstutzen, dadurch gekennzeichnet, daß die Schulter des Flanschstutzens mindestens eine Schicht eines Verbundwerkstoffes mit elastomerer Matrix mit hohem Modul und starker Anisotropie nach einem der Ansprüche 1 bis 9 aufweist.

**17.** Membranschutz einer pneumatischen Federung, dadurch gekennzeichnet, daß er aus mindestens einer Schicht eines Verbundwerkstoffes mit elastomerer Matrix mit hohem Modul und starker Anisotropie nach einem der Ansprüche 1 bis 9 besteht.

**18.** Elastisches Material zum Schutz vor Stößen, insbesondere vor dem Aufprall ballistischer Geschosse, dadurch gekennzeichnet, daß es aus mindestens einer Schicht eines Verbundwerkstoffes mit elastomerer Matrix mit hohem Modul und starker Anisotropie nach einem der Ansprüche 1 bis 9 besteht.

FIG_1

FIG_2

FIG_3

FIG_4

FIG_5

## FIG_6

## FIG_7